# EUROPEAN PATENT APPLICATION

(11) **EP 2 372 576 A1**
(43) Date of publication of application: **05.10.2011**
(21) Application number: 10250653.2
(22) Date of filing: 30.03.2010
(51) Int. Cl.: G06F 17/30, H04L 29/08

(54) **Federated file distribution**

(71) Applicant: British Telecommunications public limited company, London EC1A 7AJ (GB)
(72) Inventor: The designation of the inventor has not yet been filed
(74) Representative: Lau, Chi-Fai

(57) **Abstract**

The invention proposes a method of distributing a file between a plurality of nodes in a local area network. In particular, the nodes form a group and agree a file to be downloaded and shared. This is done prior to each node then downloading a portion of that file over a wide area network. The file portions are then distributed between the nodes over a separate local area network, so that each peer ends up with all the portions of the file, and thus a copy of the final file. Not only is the file for download by the peers agreed before downloading of the portions takes place, but the download and subsequent distribution take place over different networks.

## Description

### Field of the Invention

This invention relates to a method of distributing a file between nodes in a local area network. In particular, the method relates to agreeing which portions of the file each node is to transfer over a first network, transferring those portions, and then distributing the portions between the nodes over a second network.

### Background to the Invention

'Thin clients' are a classification of PC based hardware and software devices that do not possess significant processing capacity. They have small amounts of RAM, virtually no storage, but can be attached to monitors and have ports for keyboards and mice and perform basic computing functions like browsing, email, word processing and spreadsheets. Thin clients are 'bootstrapped' by loading copies of their Operating Systems (OS) image over a connected network. The size of a thin client's image file can be significant (up to 600MB for example), but equally can be a few MBs if running a 'slim' operating system like Linux for example.

'Lean clients' possess slightly more hardware than thin clients, which allows them to locally store a copy of their operating system. So, providing the OS is up to date (which can be checked during a bootstrap sequence), there is not a requirement to download the image file over the network. This OS can reside directly on the end device or on a 'proxy' device, e.g. PC, NAS drive or other storage device in the home network.

In both thin and lean client situations, an operating system (and firmware build) is required during bootstrapping. Depending on whether the client is thin or lean, the Operating System is either drawn from the network every time (thin) or from a local store (lean).

With wireless networks becoming more and more common today, consider the situation where thin clients are situated behind wireless networks. Now consider that in built up areas with overlapping radios from Homes of Single Occupancy (HSO) or Homes of Multiple Occupancy (HMO) such as flats, wireless networks will overlap. Finally, consider that multiple wireless enabled Customer Premises Equipment (CPE), like a wireless router, within a HSO or HMO in densely built-up areas may be connected to the same broadband exchange/DSLAM. If every lean client behind such CPE required updating, then image files would need to be delivered to each end device as it came online.

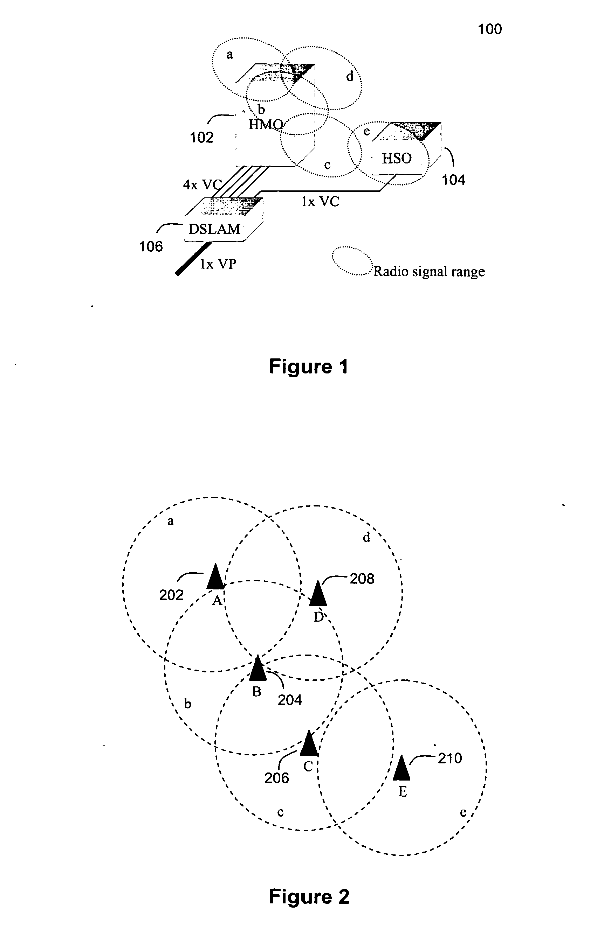

Figure 1 shows such an arrangement 100, comprising a HMO 102 and a HSO 104. Overlapping wireless signals across the HMO 102 and the HSO 104 are shown as: a, b, c, d, and e. In the case of ATM, any clients located within one of the wireless networks can connect to the internet via a WiFi Access Point connected to an Internet Access Device (IAD) over a virtual circuit (VC). Each IAD VC is connected to the exchange, DSLAM 106. The DSLAM 106 aggregates all these VCs into a Virtual Path (VP) back to the next hop in the network. This practical consideration means that data from and to each VC needs to traverse across the same VP. In an envisaged scenario, each individual client connected to each individual wireless network access point might each download a copy of the same image file, which would mean that five copies of an image file would need to be sent over the VP before being de-multiplexed into respective VC's. Such a scenario presents a significant overhead in bandwidth required to transmit the image files as each file is transferred over the common VP. Similarly, other scenarios where similar files are concurrently (or near-concurrently) downloaded would result in a similar bottleneck and impose similar bandwidth strain on the network.

An alternative to direct unicast for file transfer is a peer to peer arrangement. Peer to peer network protocols provide mechanisms for sharing data between clients in a peer group. Rules like tit-for-tat (used in BitTorrent) select other peers based on how much data is being shared (upstream). Other techniques use rules like ping rates, network 'distance' and bandwidth to setup a peer group. In WO2008/107697, content can be obtained from neighbouring peers in a wireless mesh network after content has already been downloaded.

US2006/0259573 describes a system that uses first and second peer groups. The first peer group issues a data transfer plan to the second peer group instructing it to download segments from a data serving system and transfer data to the first peer group.

EP1843552A1 describes a method using a single peer group to randomly select data segments from a 'provider' peer amongst a number of 'cooperating' peers such that should 'provider' peer leave the peer group, other peers can continue to exchange data amongst themselves.

### Summary of the Invention

It is the aim of embodiments of the present invention to address one or more of the above-stated problems, and to provide an improved method of efficiently managing file downloads.

According to one aspect of the present invention, there is provided a method of distributing a file between a plurality of nodes in a local area network, said method comprising:
(i) identifying a file for distribution between the nodes;
(ii) forming a group from said plurality of nodes;
(iii) determining, for each peer, a portion of the file that each peer is to download remotely over a wide area network; then
(iv) downloading by each peer the respective portion of the file over the wide area network; and
(v) distributing the respective portions of the file between each of the peers in group over the local area network so that each peer has all portions of the file.

Preferably, the identifying step is performed before the transferring and distributing steps.

The file portions may be downloaded from a server connected to the wide area network.

The local area network is preferably a wireless local area network.

A peer routing table may be use for distributing the respective portions of the file between peers, said peer routing table identifying one or more interconnections between each of the plurality of nodes in the group. The interconnections may correspond to direct connections between the respective nodes.

Preferably, the file portions are distributed over the local network without use of the wide area network.

The invention seeks to reduce the amount of data that traverses links like the VP in Figure 1, by endpoint CPE self organizing itself into a wirelessly connected 'federation' and agreeing a priori, what data to download in advance, sharing data between the federation in order to reconstruct original files over two networks.

Finally, it should be noted again that this invention may not necessarily be restricted to use by thin clients, but could be applied to general purpose file transfer (e.g. for video content) where the intention is to reduce data redundancy and utilize network links by intelligently federating CPE and end devices over radio/wireless networks.

### Brief Description of the Drawings

For a better understanding of the present invention reference will now be made by way of example only to the accompanying drawings, in which:
Figure 1 is a block diagram of a conceptual ATM network in an example of the present invention;
Figure 2 is diagram showing a group of wireless nodes and associated overlapping wireless coverage areas;
Figure 3 is a connected graph of the nodes in the network;
Figure 4 is an example of a wireless node;
Figure 5 is an example peer routing table;
Figure 6 shows an example of a file divided into chunks, labelled with the associated peer responsible for download;
Figure 7 is a flowchart showing how a peer calculates its initial chunk for download (ahead of peer exchange of other chunks);
Figure 8 is a flowchart showing the pre-processing for file chunk distribution;
Figure 9 is a flowchart showing the processing for file chunk distribution in an example of the present invention;
Figures 10A-10P is a step-wise example of how file chunks are distributed between 5 peers following the processing outlined in Figures 8 and 9.

### Description of Preferred Embodiments

The present invention is described herein with reference to particular examples. The invention is not, however, limited to such examples.

In examples of the present invention there is proposed a method of distributing a file between a plurality of nodes in a local area network. In particular, the nodes form a group and agree a file to be downloaded and shared. This is done prior to each node then downloading a portion of that file over a wide area network. The file portions are then distributed between the nodes over a separate local area network, so that each peer ends up with all the portions of the file, and thus a copy of the final file. Not only is the file for download by the peers agreed before downloading of the portions takes place, but the download and subsequent distribution take place over different networks.

Referring to Figure 1 in more detail, there is shown an arrangement 100 comprising a HMO 102 and a HSO 104. Five wireless networks (a, b, c, d, and e) are shown covering the HMO 102 and HSO 104. Each wireless network is provisioned by a corresponding wireless access point (A, B, C, D, and E) or node operating according to the IEEE 802.11 standard. Each wireless access point, AP, or node provides wireless local area connectivity as well as wide area connectivity over a DSL connection. Client terminals, such as a PC or laptop, can connect to a node it is in range of. In the case of ATM being the layer 2 network servicing DSL, the DSL connection from each node is shown in Figure 1 as being provided over a virtual circuit (VC) that terminates at a digital services line access multiplexer (DSLAM) 106 at a local exchange. The DSLAM 106 aggregates the VCs from each AP into a single Virtual Path (VP) that connects to the next hop in the network, which may include the Internet. The DSLAM, VP and further network connections including the Internet, can be considered part of a wide area network that is separate from the wireless local area networks, WLANs, of a to e. A client connected to one of the APs can thus connect to the wide area network and download data from the Internet or other further networks. Furthermore, the arrangement 100 shows that whilst each node has its own VC, all the nodes ultimately share a single common VP once aggregated by the DSLAM 106.

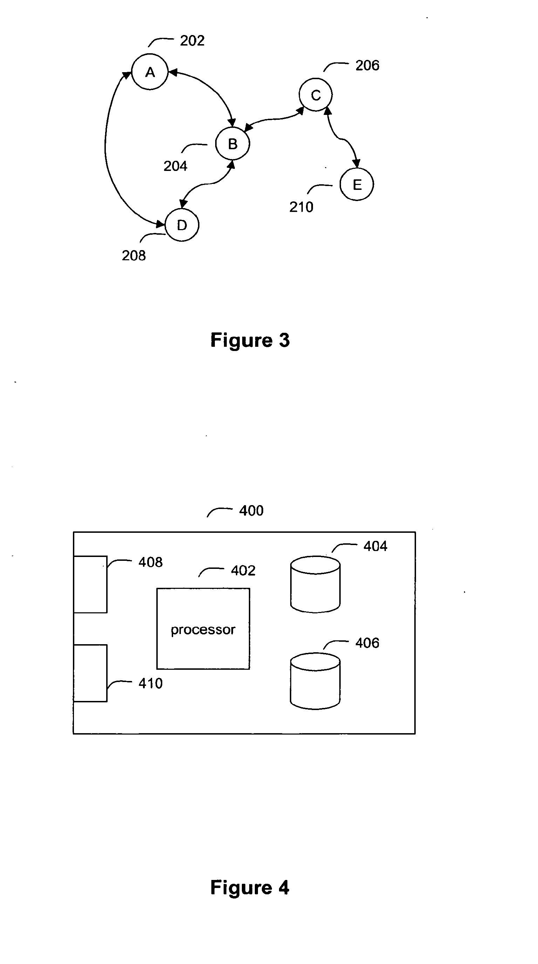

Figure 2 shows the nodes A 202, B 204, C 206, D 208 and E 210, with their associated wireless coverage areas a, b c, d, and e. The overlapping nature of the networks effectively results in a wireless mesh network (WMN), with each node capable of direct communication with at least one other node. The group of nodes that form the WMN is not transitively closed. This is illustrated in Figure 3, which shows a connected graph with symmetric closure between selected pairs of nodes. Specifically, in this example, node A 202 has a symmetric connection with node B 204 as well as node D 208, node B 204 has a symmetric connection with node C 206 as well as node D 208, and node C 206 has a symmetric connection with node E 210. The group of nodes A-E is also referred to as a federation.

Figure 4 shows an example of a wireless node 400, comprising a processor 402, storage 404 for storing program code, a cache 406 for storing downloaded files, a wireless network interface 408, and a DSL network interface 410. Whilst the storage 404 and cache 406 have been shown as separate entities, a skilled person will appreciate that both are likely share the same physical means such as RAM, a hard disk or flash memory. The wireless network interface 408 is configured to operate according to IEEE 802.11 standard and can receive and transmit data from other similarly configured terminals. The wireless node 400 also has further components, but these components have been omitted for clarity. Examples of the invention are realised, at least in part, by executable computer program code which may be embodied in the application program data stored in the storage 404. When such computer program code is loaded into the memory of the processor 402 for execution, it provides a computer program code structure which is capable of performing at least part of the methods in accordance with the above described examples.

Furthermore, a person skilled in the art will appreciate that the computer program structure referred can correspond to the process flow charts described herein below, where each step of the flow chart can correspond to at least one line of computer program code and that such, in combination with the CPU in the receiving terminal, provides apparatus for effecting the described process.

Now consider that some of the nodes wish to download a common file from the internet. This may occur for example when the nodes act on behalf of connected client terminals that require the file. The file may be an operating system, software update or any other file. In the case where the nodes are trying to obtain a file on behalf of a client, the node is effectively acting as a proxy, making any file request on behalf of the client.

However, before any file is downloaded, the nodes follow a process to discover each other's existence. Under IEEE 802.11, this can be done using the standard ad-hoc set-up approach, where new peers are discovered, which can then be added to the Peer Routing Table (PRT). The PRT is a table held by each peer with a list of the other peers in the federation, and which of those it can directly communicate with.

In a WMN arrangement, the routing table's length is not pre-defined. However, in this specific example, we assume that all five nodes A-E wish to be in the federation, and hence the routing table has a length of 5. In densely populated WMN areas, routing tables may be considerably longer. Equally, at the edge of radio range of when a node appears to 'link' between two federations, routing tables may be shorter. Indeed, a node may be a peer in more than one federation.

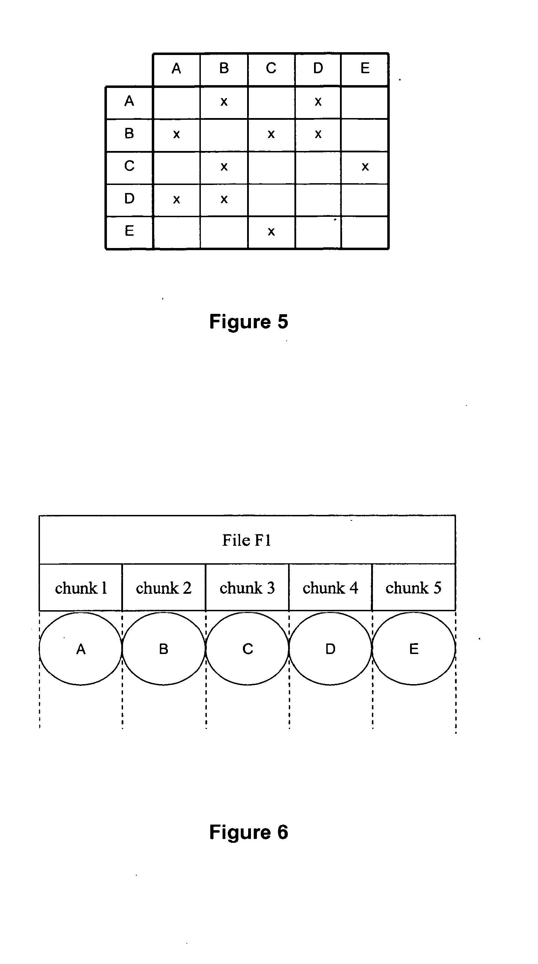

So, after the scanning is complete, a WMN federation of five peers (nodes A, B, C, D and E) is created. Figure 5 shows the final peer routing table with the five peers, with a "x" marking which of the other peers any given peer can communicate with (as identified through ad-hoc peer discovery). This effectively marks out any direct radio links a peer has with another peer in the wireless network. Each peer has such a routing table, and thus all peers can share knowledge about who can communicate with who, and to define which 'chunks' of a file each will be responsible for downloading over the fixed network.

In this example, the wireless nodes are acting on behalf of clients, in particular lean clients, which will at some earlier stage register with the nodes with requests for a common file that needs to be synchronized e.g. an operating system or module. The invention could apply to any type of client, and is not limited to a PC or laptop, but could equally be applied to any common file required by the federation such as a video file requested by a set-top digital television box.

Once the request has been made by a client to the node, that request is recorded ready for when the node enters ad-hoc mode. Once in ad-hoc mode, the peers interrogate each other to determine which files each of the peers require, and thus which portion, or "chunk", of a file each peer should download. A chunk is a portion of a file, here defined by two offsets, one for the start and finish of the portion (or alternatively an offset and a length tuple).

Each client may in practice have a list of files it requires (e.g. identified by URIs), and can forward this lists to the proxy. The proxy collates all the requests from its end clients and compiles this into a proxy list record. Peers can then share their proxy list records in order to identify common files that require downloading. Common files are can be tagged for federated download by the proxies in accordance with the methods described here.

In this example, we have assumed that all the peers A-E require the same file F1 for their respective clients. Figure 6 shows how the length of the F1 is normalised. The file F1 is also broken into five chunks by dividing the length of the file by the number of peers in the federation, with each peer being assigned value offsets of between 0 and 1 for their respective chunk for downloading. The method used to decide precisely how the file is broken up is not covered in any detail here, but splitting the file equally is one preferred method.

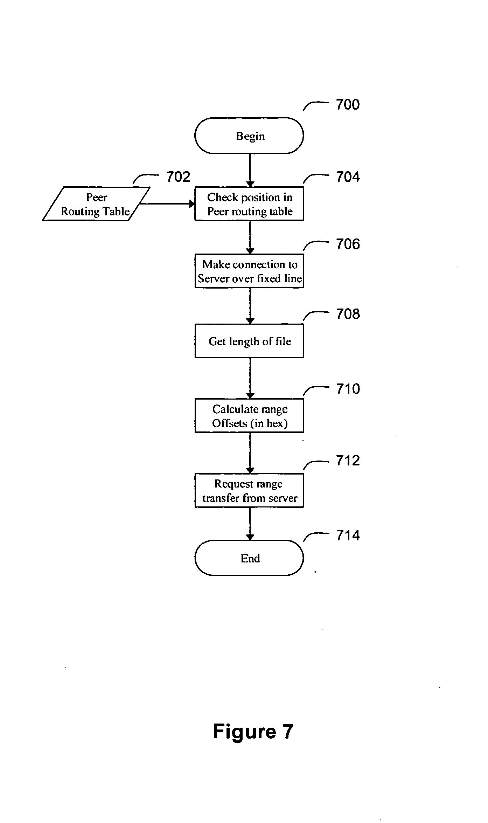

Figure 7 is a flow chart illustrating the process of a peer getting its position in the routing table (which may be determined for example by the order in which peers advertise their intent to download a file or some other means, e.g. randomly) and using this as a way to calculate its chunk download responsibility.

Processing starts in step 700. Taking peer B as an example, in step 904, peer B checks for its position in the peer routing table 702. The position of the peers in the PRT can be obtained using various methods, including by ranking of the hash values of the MAC addresses of the peers. Here, peer B is at position #2 in the table of 5 peers. Then in step 706, peer B makes a connection to the server providing the file F1. The server in this example is connected over the Internet over the fixed line wide area network connection (here, an xDSL connection). In step 708, peer B communicates with the server to determine the length of the file F1. In step 710, the range offsets for the chunk corresponding to position #2 (chunk 2) are calculated. Here, peer B can calculate that it will be responsible for chunks at offsets file_length * 0.2 to file_length * 0.4 given that it knows from the peer routing table that there are five peers, and chunks are to be divided equally. This value will be translated back into hex values and used in conjunction with a protocol like HTTP 1.1 which supports 'chunked transfer'. The HTTP 1.1 protocol is particular useful as it natively supports the concept of offset transfer. In step 712, the requisite chunk is downloaded over the fixed xDSL connection. Processing finishes at step 714.

Whilst the method above has been described in relation to chunks of equal size, alternative methods could be employed where the peers may have different weightings and the size of each chunk downloaded by that peer is dependent on the weighting. Thus, some peers may download larger chunks than other peers. Nonetheless, the general method described here still applies.

Thus, each peer A-E can follow the steps set out in Figure 7, and finish with downloading its respective chunk of the file F1 from the remote server over its respective wide area network.

The final part of the method relates to how those chunks of the downloaded file are disseminated between the peers over the wireless local area network, such that each peer has all the chunks needed to reconstruct the file.

Following the initial download of a chunk by each of the peers (Figure 7), the network of peers enters a state of chunk exchanges between the peers over the wireless local area network. In order to control the federation, as the as-hoc network of peers is effectively a distributed system, to manage the process of chunk exchanging, one of the peers is identified as the 'controller'.

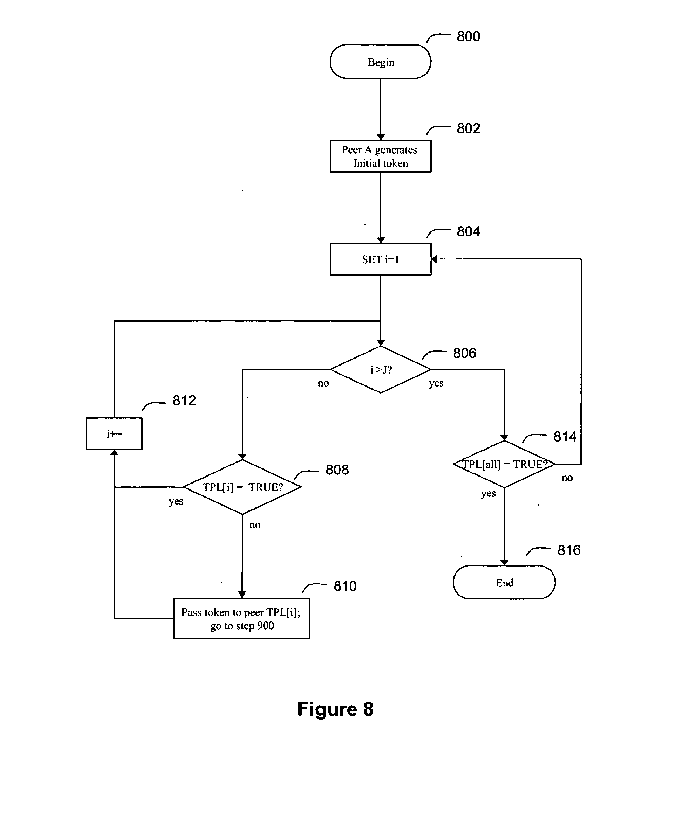

Referring to Figure 8, step 800 shows the start of the process. In step 802, the first peer in the PRT (peer A) is chosen as the 'controller' and therefore, generates and initialises a 'token'. The various methods that can be used to select the peer to act as a controller are not explored here in detail. However, in this example the first peer in the PRT is selected.

The generated token, is used for two purposes: (i) to pass control between peers in the ad-hoc network and; (ii) to maintain state on each peer on whether a peer has obtained all chunks or not.

In step 804, a counter, i, is initialised to 1. This counter is used to incrementally loop through the peers in a token peer list (TPL) and invoke a method on each of the peers for them to check for chunks on peers they can communicate with over the local network using their PRT. The TPL is effectively a data structure containing records comprising peer identifiers and an associated field for each peer identifier representing that peer's state. The TPL is created by the first peer and is passed to other peers during the processing.

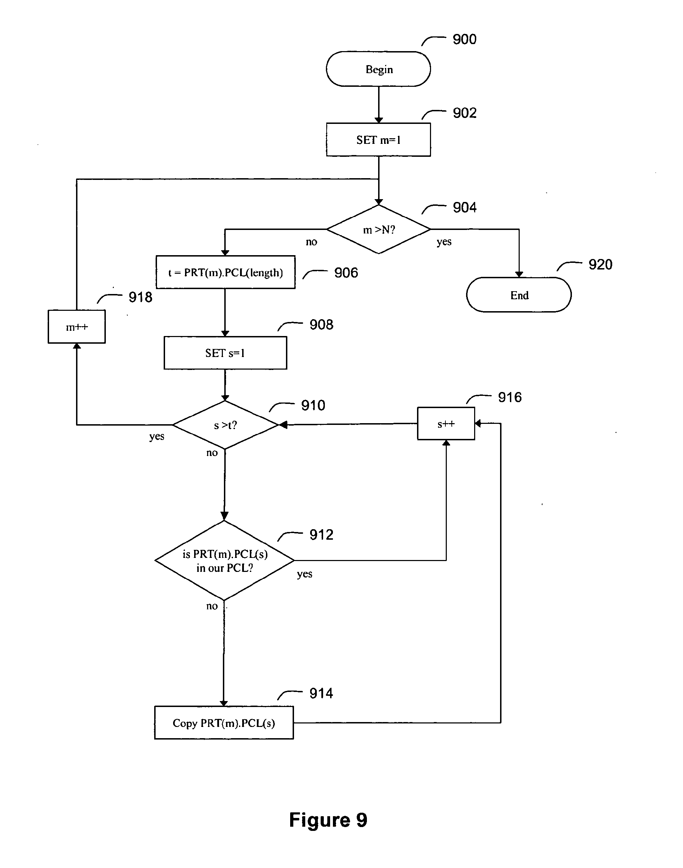

In step 806 begins this process by checking if the value of the counter i is greater than a variable, J. The variable J represents the number of peers in the token peer list. In this example, J = 5 (peers A to E). If i is not greater than J, processing passes to step 808, which checks to see if the state of peer i in the Token Peer List is TRUE (is TPL[i] = TRUE), where a state of TRUE means that the peer in question has all the required file chunks, and FALSE denotes that chunks are still required. If the state TPL[i] is NOT TRUE (i.e. FALSE, and thus peer i still requires a file chunk), the peer holding the token, initially the controller peer, passes the token to peer i in the Token Peer List in step 810 so that peer i can obtain missing file chunks. Step 810 passes on processing to step 900 in Figure 9. After step 810 (and linked processing in Figure 9) is complete for peer i, processing passes to step 812, where i is incremented by 1, and the loop returns to step 806. The cycle repeats until all peers have been processed (when the value of i is greater than J), at which point the result of the test in step 806 is "yes", and processing passes to step 814, which checks the state of all the peers in the TPL.

In step 814, performed by the controlling peer or the last peer in the TPL, the status of all the peers is checked by examining the TPL and if all the peers have a state of TRUE (i.e. all peers have a complete set of chunks for the file), processing finishes in step 816. If any of the peers does not have a state of TRUE (i.e. at least one more chunk required by that peer), then processing passes back to step 804 to repeat the process, with i being reset to 1 and another round of peer chunk exchange is performed (described with reference to Figure 9 below). The process is repeated for a number of rounds until all peers have all chunks i.e. test in step 814 returns TRUE.

The test in step 814 and loop back to step 804 may be required when a single round of exchange is insufficient to distribute all the chunks required by each peer. The number of rounds required will depend on the number of peers and how those peers are interconnected.

From the above process, step 810 refers processing for the peer at TPL[i] to step 900 in Figure 9. Step 900 in Figure 9 is the entry point for a peer (peer i in the TPL) to get chunks from other connected peers in the local network. At this point, the token has been passed, and thus control goes to that peer i.e. the peer located at TPL[i] as a result of step 810. The peer then runs the logic described below starting at step 902.

In step 902, a counter 'm' is initialised to 1. This counter m is checked against a variable 'N' in step 904. 'N' represents the number of peers a given peer can communicate with as set out in the Peer Routing Table (PRT). For example, from the PRT shown in Figure 5, 'N' is 2 for peer A, and 3 for peer B. If the m is not greater than N (step 904), then processing passes to step 906. Counter m is used to incrementally loop through each connected peer listed in the PRT and used to cross reference the file chunks held by that peer, as described below.

The peer chunk list (PCL) describes the list of file chunks held by a given peer. Initially, the PCL for each peer will only contain the single file chunk initially downloaded. However, by applying the method described by Figures 8 and 9, the PCL for each peer will grow until all the PCLs are equal to the total number of chunks into which the file was originally divided up for downloading. In step 906, the variable 't' represents the length of the Peer Chunk List (PCL) of peer m in the current peer's (peer i's) PRT.

In step 908, the variable s is set to 1. The variable s is used as a pointer to cycle through each entry in the PCL. This is used in the loop that starts with step 910.

In step 910, a check is made to see if s is greater than t i.e. are we at the end of the PCL. If s is not greater than t (i.e. there are file chunks to process), processing passes to step 912. In step 912, a check is made to determine if file chunk s held by peer m (with reference to the PRT of the present peer i) is in the present peer's (peer i) PCL. Thus, peer i will connect with peer m over the wireless local network to determine what file peer m is holding at position s in its PCL. If that chunk is not in the current peer's PCL, then processing passes to step 914, where that chunk is transferred over the wireless local network from peer m to peer i. If that chunk already exists in the present peer's PCL, the processing passes to step 916, which increments s by 1. Step 916 is also triggered after step 914. After incrementing s in step 916, processing passes back to 910 and s is tested against t again.

If s is greater than t (i.e. all the chunks in the PCL of peer m have been processed), then processing passes to step 918, where m is incremented so that the next peer in the PRT table of peer i can be processed. Processing passes to step 904 again where a check is made to see if m is greater than N. If it is, then all peers in the PRT have been processed, and passes onto step 920 which ends the processing. Control, then passes back to Figure 8, and step 812.

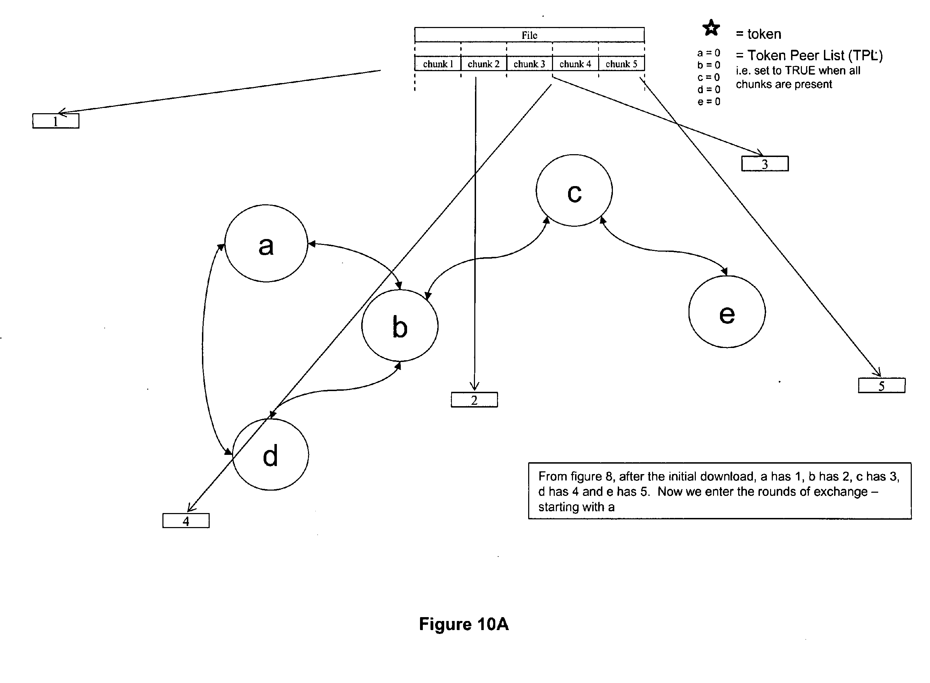

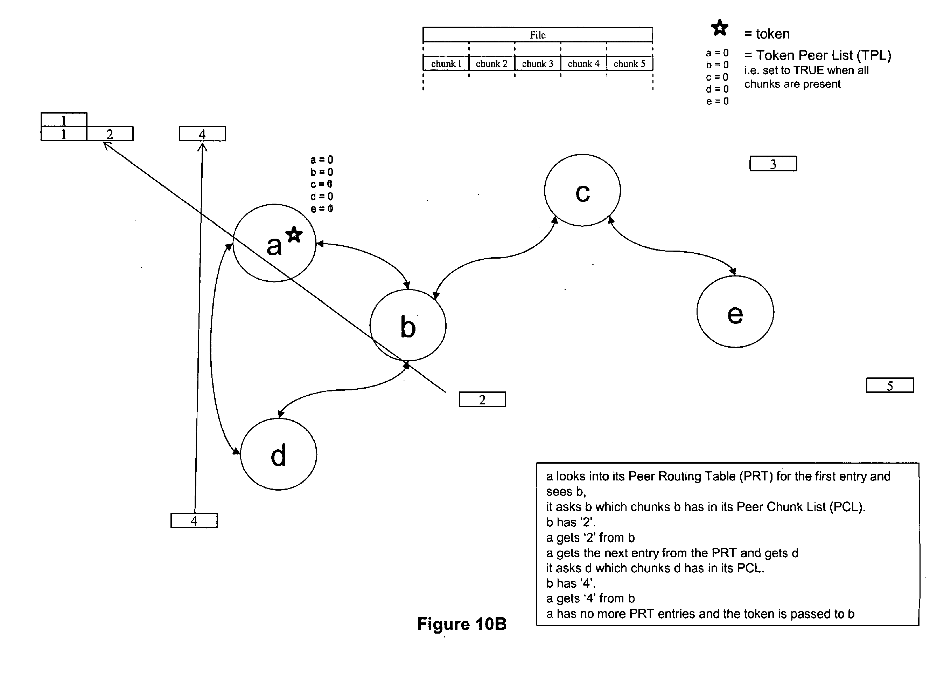

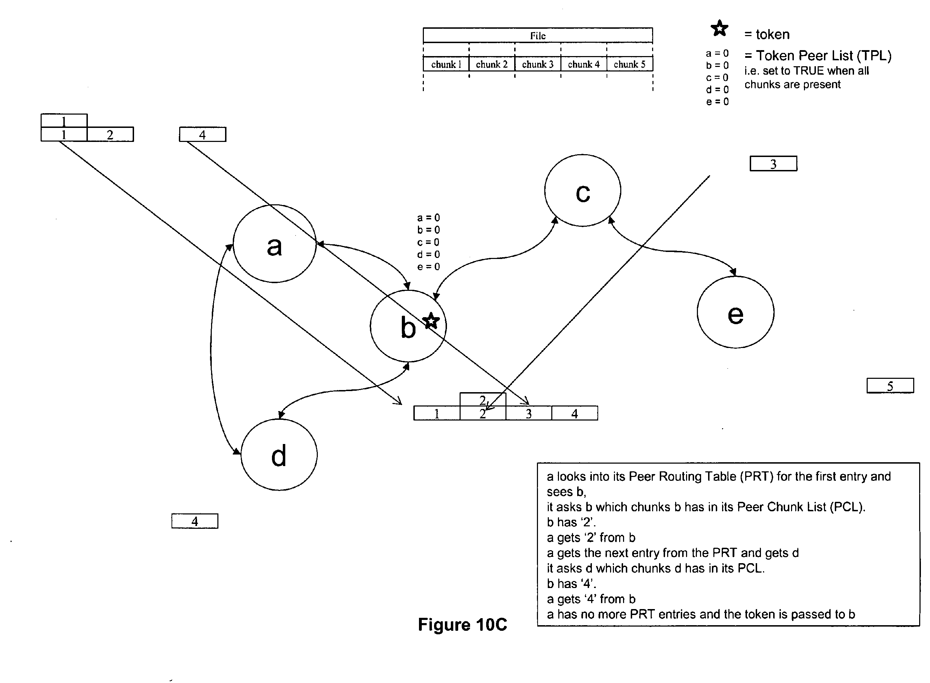

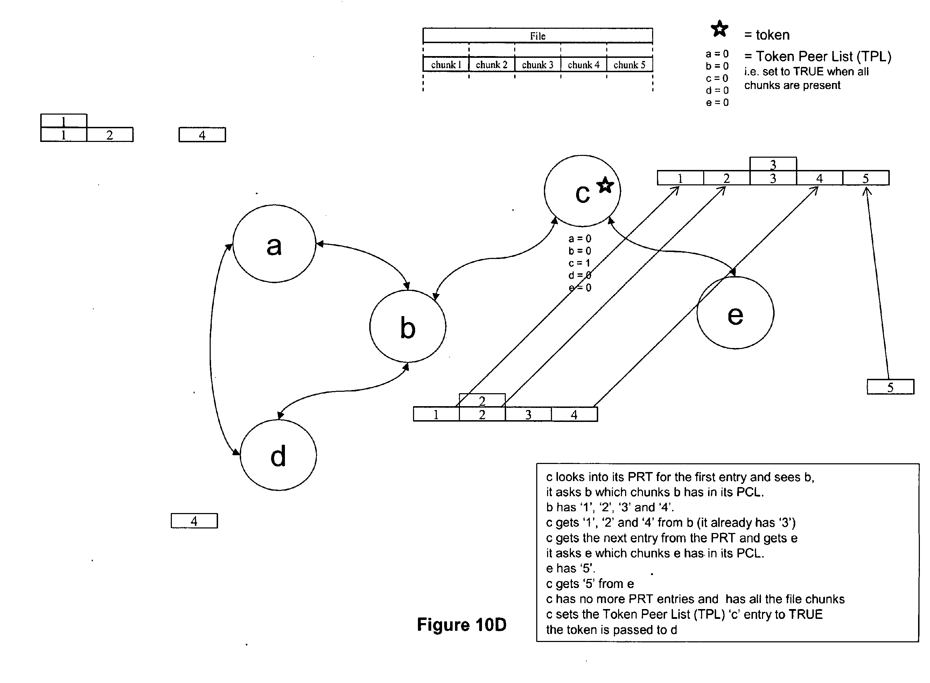

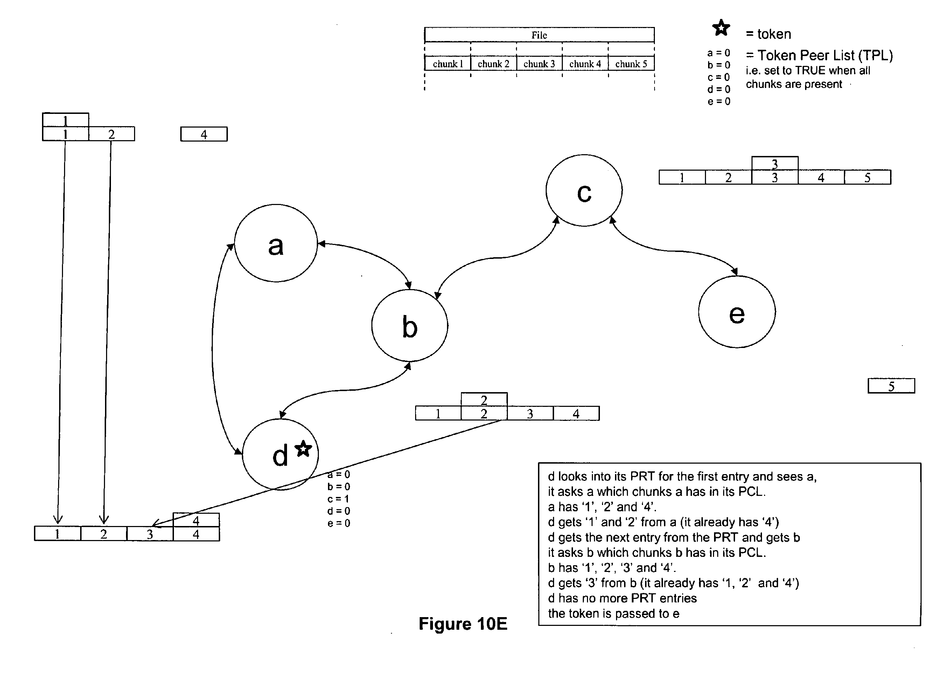

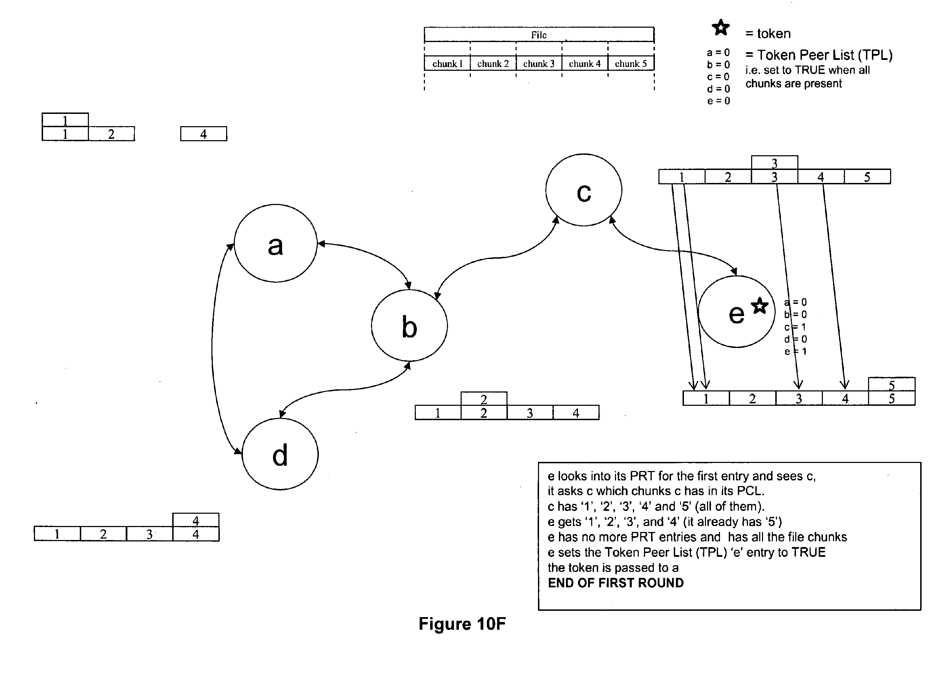

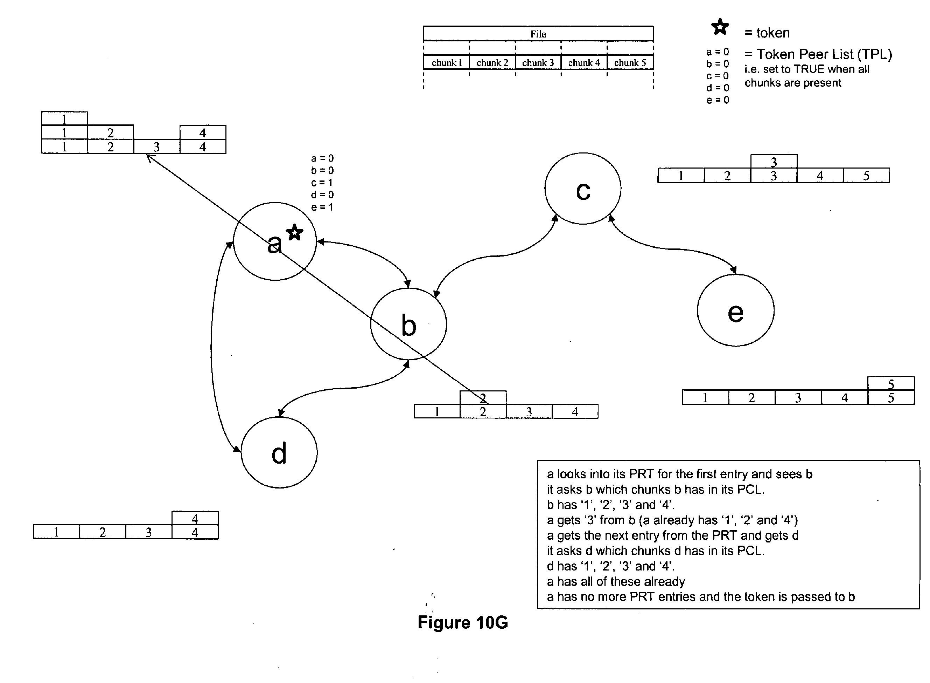

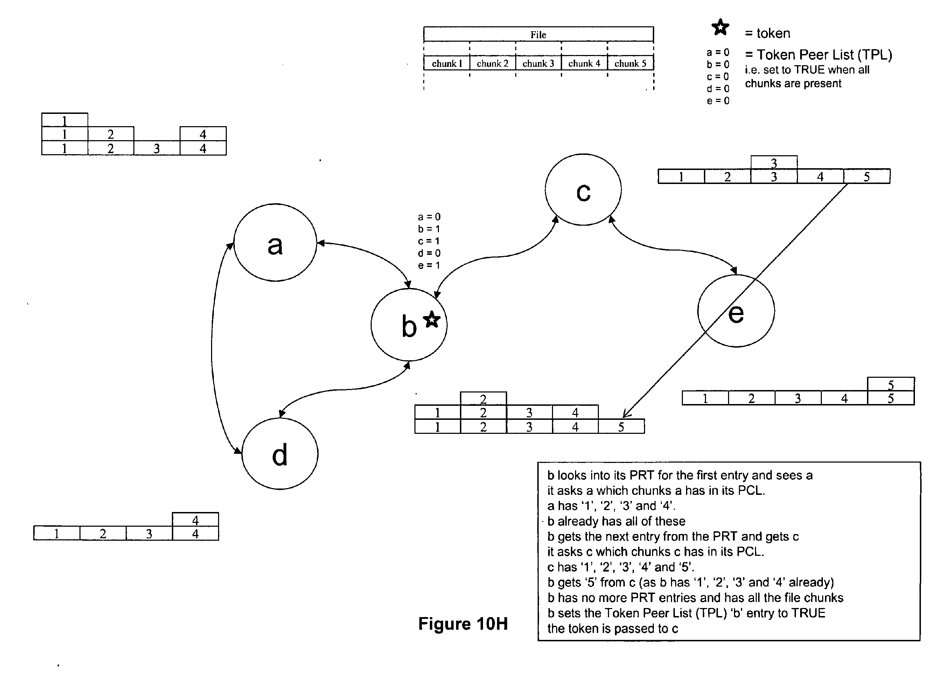

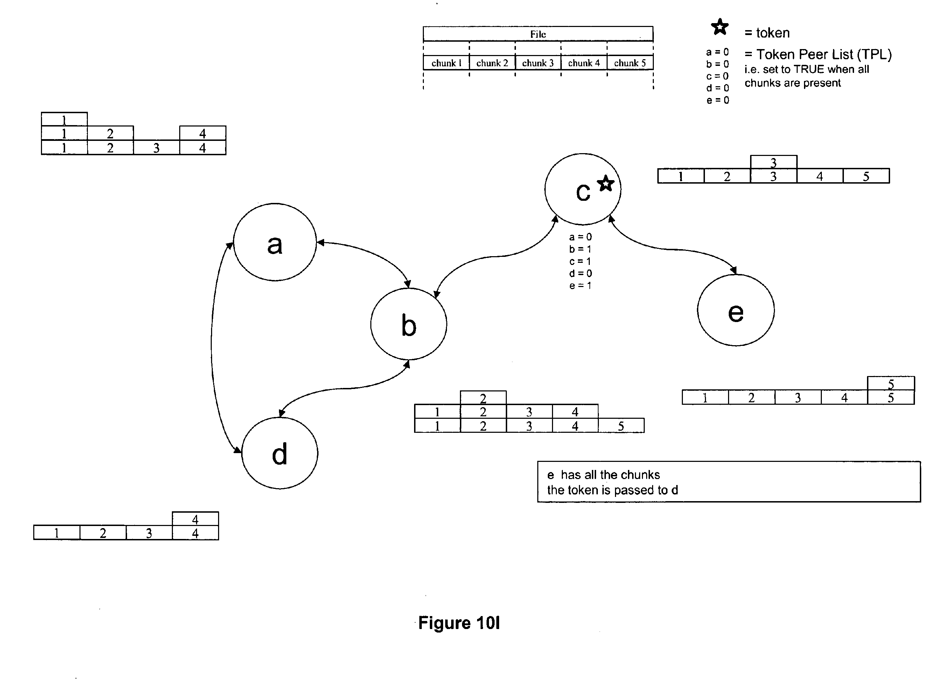

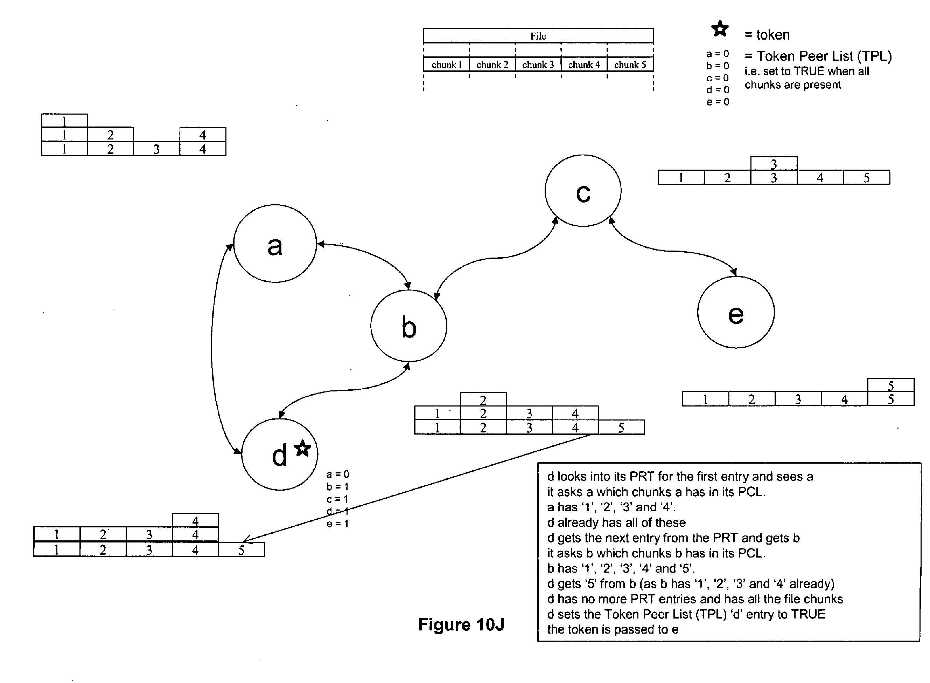

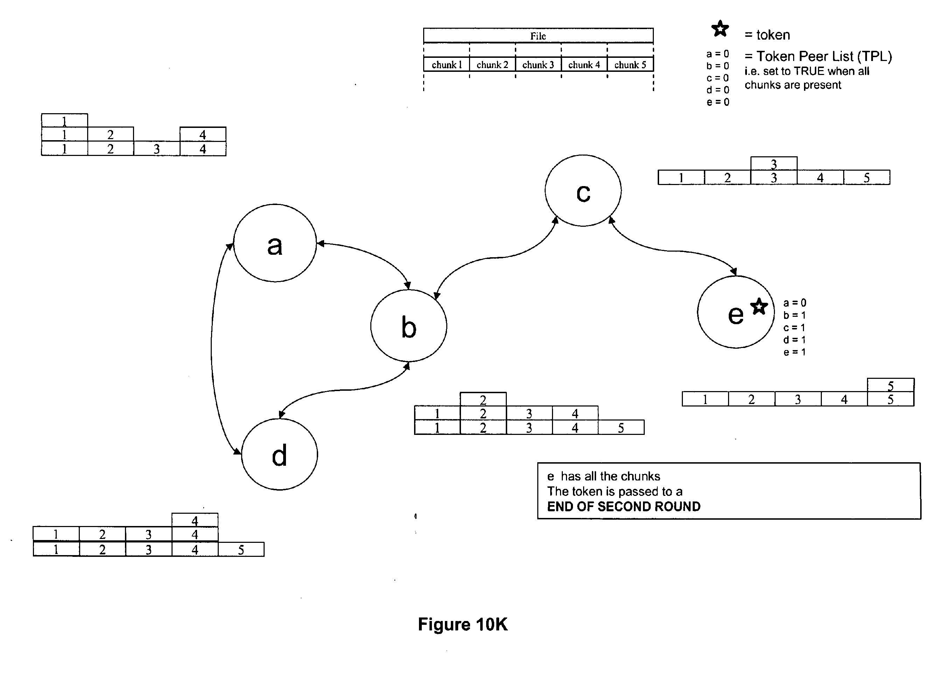

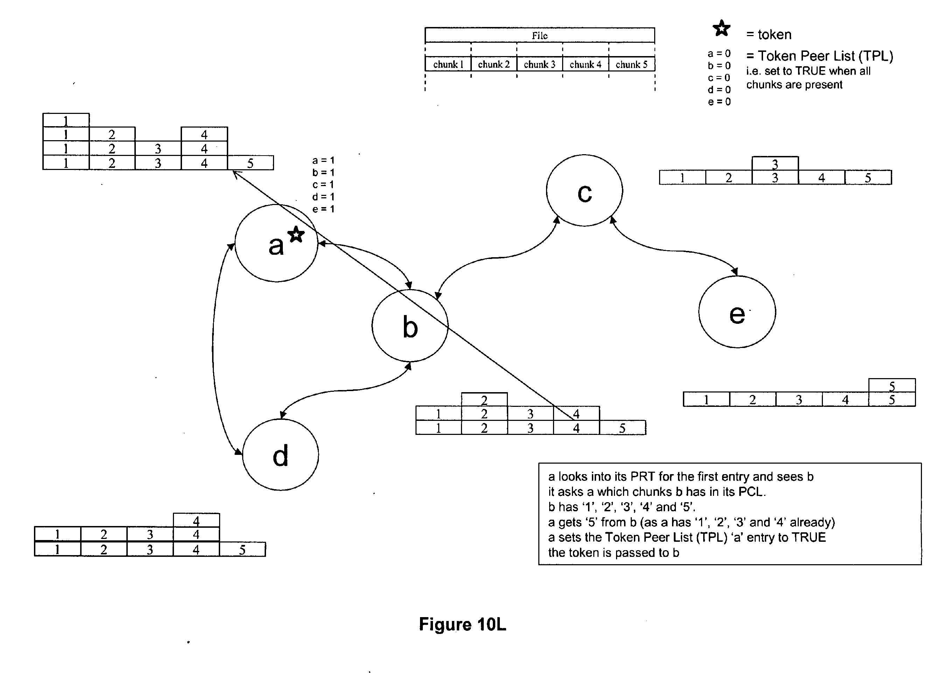

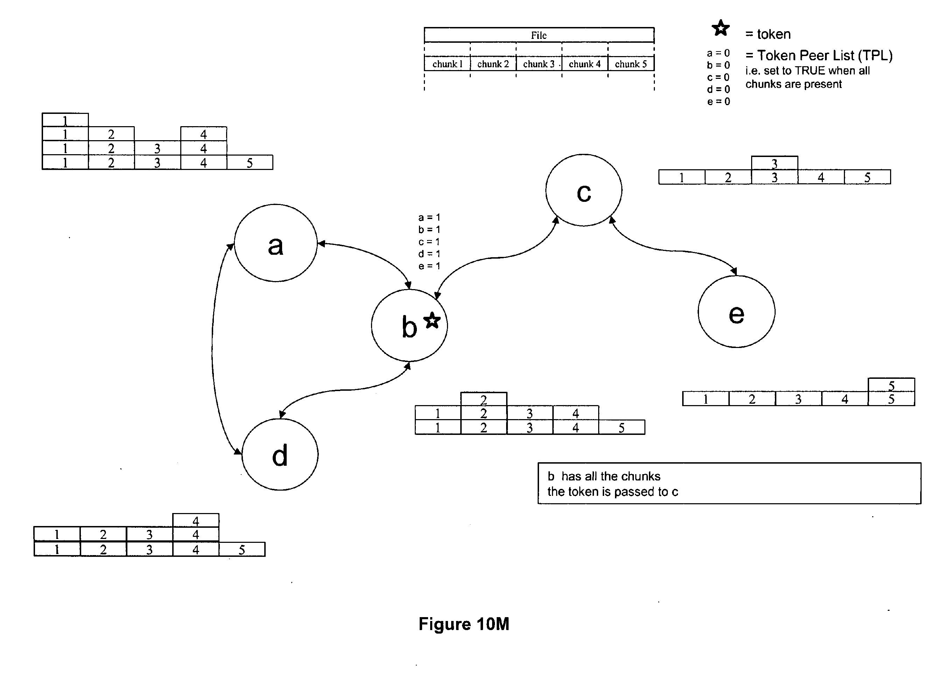

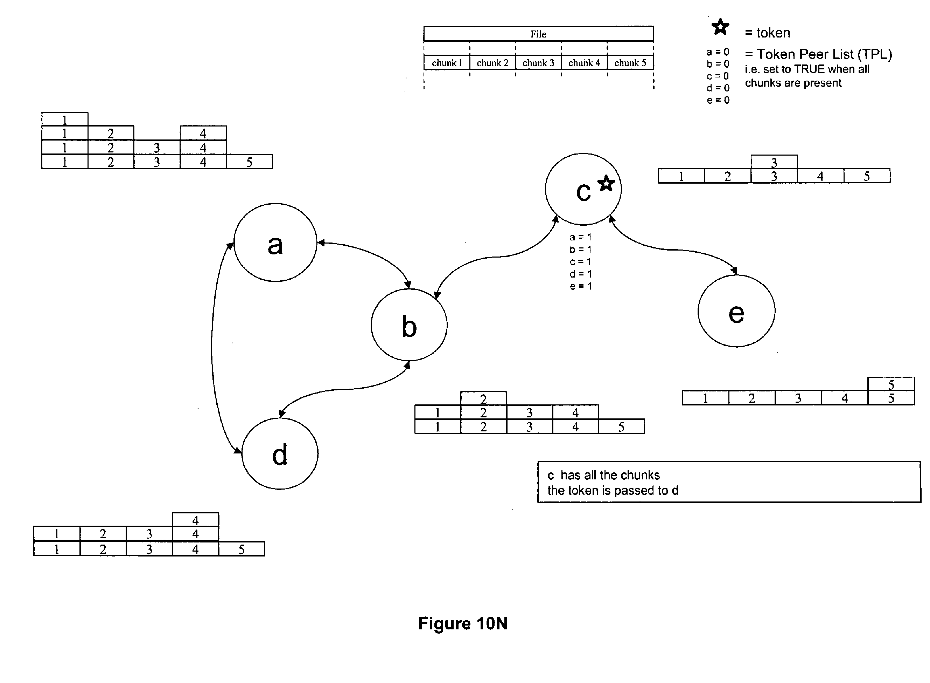

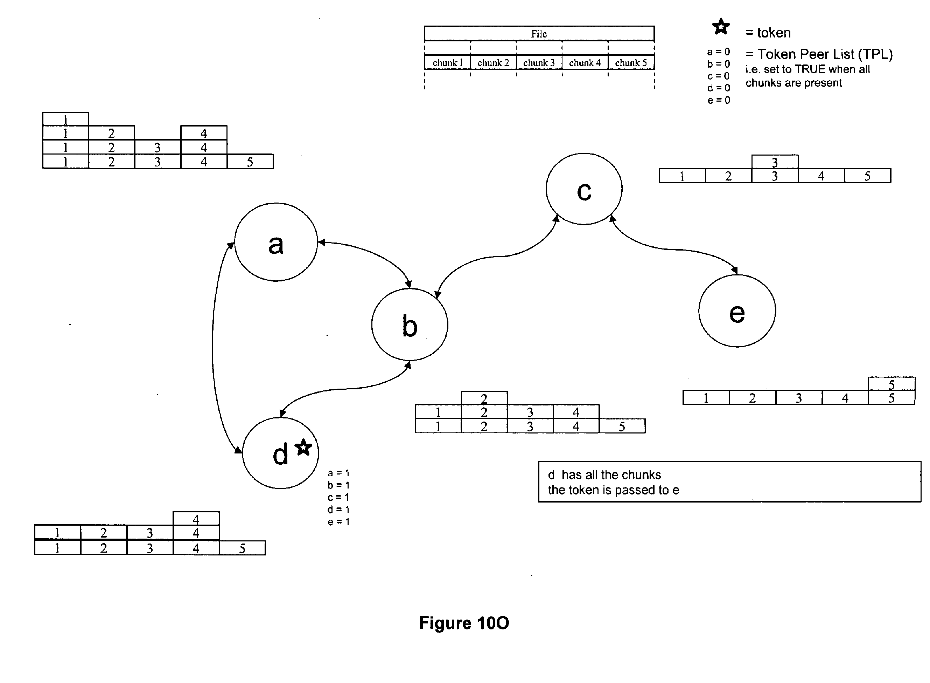

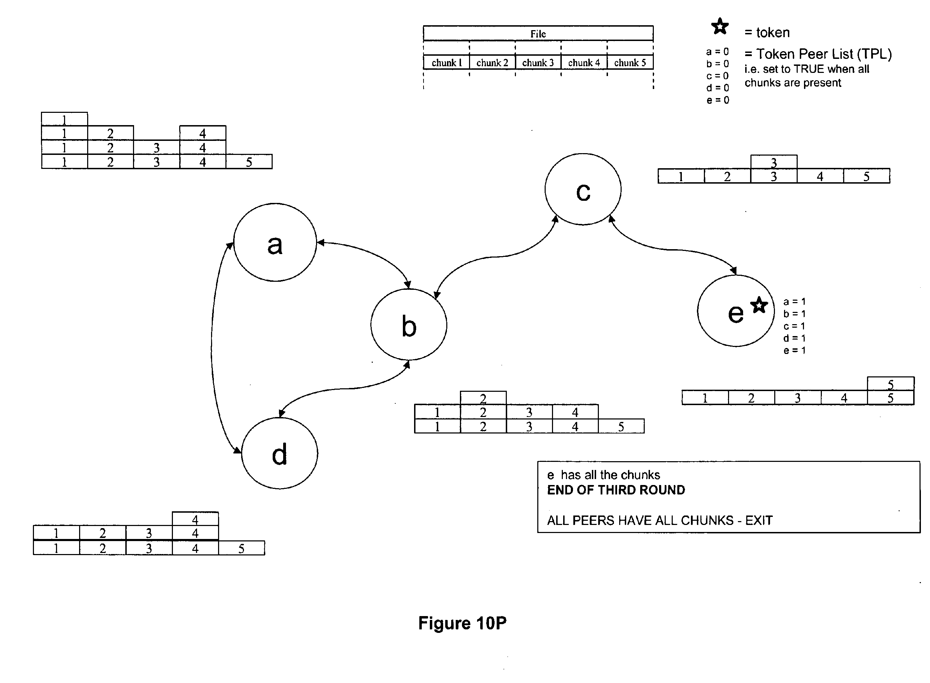

Figures 10A-10P illustrate an example of how file chunks are distributed between 5 peers (a, b, c, d and e) following the processing outlined in Figures 8 and 9.

The core of the invention requires only that two separate networks are required to achieve the objective - a local area network and a wide area network. The wide area network has been described as featuring a wired DSL component connecting to each of the peers. However, other types of wide area network can be used, including a wireless network, such as WiMAX. Furthermore, whilst a IEEE 802.11 wireless local area network has been described, the described methods could equally work with other wireless networks or indeed a wired local area network, as long as that network is separate from the wide area network that the file chunks are being transferred over.

In general, it is noted herein that while the above describes examples of the invention, there are several variations and modifications which may be made to the described examples without departing from the scope of the present invention as defined in the appended claims. One skilled in the art will recognise modifications to the described examples. For example, the sharing of the files between peers after download has been described using a controller peer. However, a person skilled will appreciate that a more distributed/parallel method could be employed instead without a controller peer.

## Claims

1. A method of distributing a file between a plurality of nodes in a local area network, said method comprising:
(i) identifying a file for distribution between the nodes;
(ii) forming a group from said plurality of nodes;
(iii) determining, for each peer, a portion of the file that each peer is to download remotely over a wide area network; then
(iv) downloading by each peer the respective portion of the file over the wide area network; and
(v) distributing the respective portions of the file between each of the peers in group over the local area network so that each peer has all portions of the file.

2. A method according to claim 1, wherein the identifying step is performed before the transferring and distributing steps.

3. A method according to claim 2, wherein the portions are downloaded from a server connected to the wide area network.

4. A method according to any preceding claim, wherein the local area network is a wireless local area network.

5. A method according to any preceding claim, further comprising using a peer routing table for distributing the respective portions of the file between peers, said peer routing table identifying one or more interconnections between each of the plurality of nodes in the group.

6. A method according to claim 5, wherein the interconnections correspond to direct connections between the respective nodes.

7. A method according to any preceding claim, wherein the portions are distributed over the local network without use of the wide area network.
